# EUROPÄISCHE PATENTSCHRIFT

(11) **EP 0 538 757 B1**
(45) Veröffentlichungstag und Bekanntmachung des Hinweises auf die Patenterteilung: **04.06.1997**
(21) Anmeldenummer: 92117783.8
(22) Anmeldetag: 17.10.1992
(51) Int. Cl.: B65B 11/04, B65B 51/20

(54) **Verfahren zum Verpacken von Gewebeballen in eine Schutzfolie und Vorrichtung zur Durchführung des Verfahrens**
Method for packaging tissue bales in a protective film and device for executing the method
Procédé pour emballer des balles de tissu dans une feuille protectrice et dispositif pour la mise en oeuvre du procédé

(30) Priorität: 23.10.1991 IT MI912790
(43) Veröffentlichungstag der Anmeldung: 28.04.1993
(73) Patentinhaber: TESTA S.p.A., 24050 Zanica (IT)
(72) Erfinder: Testa, Vencesclao, I-24059 Urgnano (IT)
(74) Vertreter: Mayer, Hans Benno, Dipl.-Ing.

(56) Entgegenhaltungen:
- GB-A- 2 043 021
- US-A- 2 893 191

## Beschreibung

Die vorstehende Erfindung bezieht sich auf ein Verfahren und auf eine Vorrichtung zum Verpacken von Gewebeballen unter Zuhilfenahme einer Schutzfolie gemäß dem Oberbegriff der Ansprüche 1 und 3 (GB-A-2 043 021)

In der folgenden Beschreibung wird mit dem Ausdruck "Gewebe" auf gewebte Erzeugnisse als auch auf allgemein bandfoermige Erzeugnisse Bezug genommen, die in Form eines endlosen Bandes vorliegen, das aufwickelbar ist und als Ballen verpackt werden kann, z.B. in einer thermoplastischen Folie oder einer unter Waermeeinfluss schrumpfbaren Folie, wie z.B. Polyaethylen. Der Verpackungsvorgang unter Zuhilfenahme einer Folie erfolgt ueblicherweise in zwei Schritten:
Ein erster Schritt besteht in der Herstellung einer Schutzhuelle, mit der der Stoffballen umhuellt wird. Es erfolgt dann ein Abschneiden der Folie sowie ein Befestigen der Folie am Stoffballen, bei Vorhandensein von breiteren Folien, deren Enden vom Ballen abstehen, erfolgt anschliessend ein Verschliessen der rohrfoermigen vom Ballen abstehenden Umhuellung.

Bei kontinuierlich arbeitenden Maschinen, z.B. bei Textilpruefmaschinen oder Wickelmaschinen, wird der aufgewickelte Ballen vor dem Schneidevorgang des Gewebes von seiner Lage auf zwei Wickelrollen auf zwei Lagerrollen verschoben. Es erfolgt dann der Trennvorgang des Gewebes, das endgueltige Aufwickeln, sowie das Anheften des Gewebeendes am Ballen, z. B. unter Verwendung von Klebebaendern.

Im Anschluss daran erfolgt ein Verlagern des Ballens, zuerst in eine Station zur Bildung der Umhuellung und anschliessend in eine Station, in der die seitlichen Enden des Ballens durch die Umhuellung verschlossen werden. Die zwei Stationen zur Herstellung der Schutzhuelle sowie zum Verschliessen der abstehenden Enden der Schutzhuelle, koennen Bestandteil einer Wickelmaschine oder aber Bestandteil einzelner Bearbeitungsstationen sein, die mit der Wickelmaschine wirkverbunden sind.

Die bekannten Verfahren und Vorrichtungen zum Umhuellen von Stoffballen, z.B. unter Verwendung einer Kunststoffolie, weisen verschiedene Nachteile auf. Die Herstellung der Umhuellung mittels einer einzigen Umhuellung und der Verschluss der Huelle durch einen doppelten Schweissvorgang und einen Schneidvorgang der Folie bringt Nachteile mit sich, die darin zu sehen sind, dass die Folie nicht sehr fest und schluessig um den Stoffballen gezogen werden kann; ferner ist fuer die vorzusehende Schweiss- und Schneidleiste ein haeufiges Auswechseln der z.B. aus Teflon bestehenden Kunststoffbeschichtung erforderlich.

Das Verschliessen der Enden des Stoffballens fuer den anschliessenden Transport ist aufwendig und erfordert mehrere Bandverschliessanlagen, mit dazugehoerigen Baugruppen und Steuereinrichtungen.

Es besteht auch die Gefahr, dass die Gewebe durch Aufbringen von Verpackungsbaendern beschaedigt werden, besonders dann, wenn es sich um sehr hochwertige Gewebe handelt. Die geschilderten Nachteile treten auch dann auf, wenn die Schutzhuelle durch Umschlingen der Stoffballen, mit auf Abstand zueinander angeordneten Klebebaendern, gebildet wird.

Die Bildung einer Umhuellung unter Verwendung von mehreren Schichten einer umwickelnden Schutzfolie benoetigt den Einsatz von steuerbaren Zusatzeinrichtungen, Halteeinrichtungen und Greifern zum Erfassen der Schutzfolie.

In einer bekannten Anlage dieser Art wird die Verpackungsfolie an den Raendern von sich drehenden Spann- und Transportzangen erfasst. Die bekannte Anlage ist sehr kostenaufwendig, sie zeichnet sich durch einen erheblichen Platzbedarf aus und erfordert Verpackungsfolien, deren Breite wesentlich die Laenge des Stoffballens uebersteigt.

Das Verschliessen der rohrfoermigen Huellenenden der Verpackungsfolie aus Kunststoff kann in bekannter Weise unter Verwendung von Metallklammern erfolgen, auch sind Verfahren bekannt, die Ultraschallwellen oder Thermoschweissvorgaenge einsetzen. Bei den bekannten Verschlussverfahren weisen die geschlossenen Enden der Schutzhuelle ein erhebliches Spiel gegenueber den Kopfenden des Gewebeballens auf. Es koennen daher Verschiebebewegungen der Huellenenden gegenueber dem Stoffballen eintreten. Ferner koennen die Huellenenden an Fremdkoerpern anstossen, was zu Rissbildungen fuehren kann und die gewuenschte abgedichtete Umhuellung zunichte macht. Der darauf folgende Eintritt von Feuchtigkeit oder Fluessigkeit in das Innere der Umhuellung kann zu einer Beschaedigung des Gewebes fuehren.

Bei bekannten Umhuellungen, die unter Verwendung von Metallklammern oder dem Einsatz von Ultraschallgeraeten verschlossen werden, verbleiben abstehende Folienteile.

Auch diese abstehenden Folienteile koennen an Fremdkoerpern haengenbleiben und zu einem Einreissen der Verpackung fuehren. Das Verschliessen der Folie mittels Thermoschweissung fuehrt zwar nicht zur Bildung von abstehenden Folienteilen, dieses Verschlussverfahren bedingt jedoch ein Sammeln sowie ein Abfoerdern der abgetrennten Enden der Huellenfolie.

Die GB-A-2 043 021 offenbart ein Verfahren und eine Vorrichtung zum Verpacken von Wicklungen aus bahnartigen Materialien, z.B. Gewebeballen, mit einer aus thermoplastischer, schrumpfbarer Schutzfolie bestehenden Schutzhuelle, sowie zum Verschliessen der aus dem Gewebeballen abstehenden Schutzhuellenenden.

Gemaess diesem Verfahren wird in den zwischen dem jeweiligen Gewebeballen und dem aeusseren Ende der abgetrennten Materialbahn gebildeten Zwickel eine Schutzfolie eingefuegt, im Anschluß daran erfolgt eine Zufuhr der Schutzfolie in Richtung des Gewebeballens, der in Aufwickelrichtung angetrieben ist, und nach Erstellung der Schutzhuelle wird die Drehbewegung des Ballens unterbrochen und ein Abtrennen der Schutzfolie erfolgt, wobei im Anschluss daran das aeussere Ende der Schutzfolie an der Schutzhuelle befestigt wird.

Gemaess der Lehre der GB-A-2 043 021 erfolgt die Zufuhr der Schutzfolie von oberhalb des zu verpackenden Gewebeballens, wobei die Schutzfolie durch ein ab- und aufgehendes und schwenkbar gelagertes laufkatzenartiges Zufuhraggregat zu- und abgefuehrt wird, und wobei der jeweilige Anfangsabschnitt dieser Schutzfolie fuer eine betraechtliche Laenge von diesem Zufuhraggregat frei schwingend herunterhaengt.

Das Einfuehren dieses frei haengenden Folienanfangsabschnittes in den Zwickel erfolgt somit durch einfaches Auflegen dieses Folienanfangsabschnittes auf das offene Gewebeballenendstueck.

Aufgrund dieser beträchtlichen Laenge des herunterhaengenden Folienanfangsabschnnittes und des vorhandenen Einfuehrungshubs bis zur inneren Zwickelspitze ist es ersichtlich, daß in der Praxis nur sogenannte halbstarre bzw. dickere Schutzfolien einsetzbar sind. Duennere Schutzfolien wuerden an sich keine einwandfrei ausgebreitete und zuverlaessige Einfuehrung in den Zwickel hinein gewaehrleisten, wobei jedoch duennere Schutzfolien billiger und deshalb vorzuziehen sind. Die Durchfuehrung dieses Verfahrens impliziert ferner eine Lagerung der Schutzfolienrolle oberhalb der den Gewebeballen aufnehmenden Aufnahmewalzen. Die Handhabung der Folienrolle ist deshalb schwierig und verlangt kranartige Vorrichtungen, weil derartige Folienrollen ein Gewicht in der Groessenordnung von 300 kg aufweisen.

Die notwendigen zahlreichen Bestandteile zur Bildung der Schutzhuelle verlangen ferner ein eigenes turmartiges Traggestell, so dass die Vorrichtung zum Verschliessen der abstehenden Schutzhuellenenden notwendigerweise eine getrennte Tragekonstruktion aufweisen muß.

Die mit dem Verfahren und der Vorrichtung gemaess GB-A-2 043 021 gefertigten Schutzhuellenenden stehen von den Gewebeballenenden ab, so dass die auf solche Weise verpackten Gewebeballen die anfangs erwaehnten Nachteile aufweisen.

Die bekannten Verpackungseinrichtungen erfordern erhebliche Aufwendungen fuer Fertigung und Anschaffung und sind zudem platzraubend, was gleichzeitig zu einem groesseren Platzbedarf fuer die Wickelmaschine fuehrt.

Aufgabe der vorstehenden Erfindung ist es, ein Verfahren zum Verpacken von Gewebeballen sowie eine Vorrichtung zur Durchfuehrung des Verfahrens zu schaffen, die es ermoeglichen, die Verpackungsfolie gleichmaessig ausgebreitet und unter Spannung schluessig um den Stoffballen zu wickeln und gleichzeitig eine Vereinfachung des maschinenbaulichen Aufwandes sowie eine Verminderung des Platzbedarfes fuer die Maschine zu erzielen.

Bei Verwendung von durch Waermeeinfluss schrumpfbaren Folien soll das erfindungsgemaesse Verfahren und die dazugehoerige Vorrichtung auch ein Verschliessen der Huellenenden ermoeglichen und ein gleichmaessiges Spannen der Verpackungsfolie auch in Umfangsrichtung an den Enden des Stoffballens ermoeglichen, ohne dass abstehende Huellenteile verbleiben und ein glatter Abschluss der Kopfenden des Gewebeballens moeglich wird.

Bezueglich der Erstellung einer Schutzhuelle fuer einen Gewebeballen wird die angegebene Aufgabe durch ein Verfahren mit den Merkmalen des Anspruchs 1 sowie durch eine Vorrichtung mit den Merkmalen des Anspruchs 3 geloest.

Hinsichtlich des Verschliessens der abstehenden Huellenenden wird die Aufgabe durch ein Verfahren mit den Merkmalen des Anspruchs 2 sowie durch eine Vorrichtung mit den Merkmalen des Anspruchs 7 geloest.

Ausgestaltungen der Erfindung ergeben sich aus den Unteranspruechen.

In vorteilhafter Weise ist die erfindungsgemaesse Vorrichtung in eine Wickelmaschine integriert.

Mit der erfindungsgemaessen Vorrichtung werden verschiedene Vorteile erreicht.

So ist z.B. nicht mehr erforderlich, den Gewebeballen durch Baender zu verschliessen. Auch kann auf Verschlussvorrichtungen und Verschlussklammern zum Verschliessen der Folie verzichtet werden. Es besteht ferner die Moeglichkeit, den Gewebeballen direkt auf den zwei Aufnahme- und Entladewalzen zu verpacken. Diese Walzen sind bereits aus schnell laufenden Wickelmaschinen sowie aus von Hand bedienten Wickelmaschinen bekannt. Die Verpackungsfolie umhuellt den Stoffballen fest und die Enden der Schutzhuelle sind ohne das Verbleiben von abstehenden Teilen der Umhuellung verschliessbar, und die Verpackungsfolie wird eng um den Stoffballen gelegt. Es wird somit vermieden, dass die verpackten Ballen versehentlich haengenbleiben, ferner werden Einrisse der Verpackung vermieden. Da der Gewebeballen direkt auf den Entladewalzen umhuellt wird, das heisst ohne einen Zwischentransport des Gewebeballens, werden die Verpackungszeiten wesentlich reduziert. Dies auch dann, wenn nach Durchfuehrung des Verpackungsvorganges die Enden der Umhuellung in anderen, bereits vorhandenen Bearbeitungsstationen, die von der Wickelmaschine getrennt angeordnet sind, geschlossen werden. Es ist ferner moeglich, den Umhuellvorgang des Gewebeballens in beliebiger Weise durchzufuehren, um dann die abstehenden Enden erfindungsgemaess zu verschliessen.

Wird die Verpackungsfolie, z.B. durch drei getrennte bandartige thermoplastische Folien, z.B. aus Polyaethylen ersetzt, und werden Antriebsriemen geeigneter Breite eingesetzt, so eroeffnet sich auch die Moeglichkeit, die Gewebeballen unter Verwendung von verschweissbaren Baendern zu umhuellen. Dies ist ohne Abaenderung der vorgeschlagenen Vorrichtung moeglich. Es kann auf bekannte Bandumhuellungseinrichtungen, die mit Klebebaendern ausgeruestet sind, verzichtet werden und es koennen Beschaedigungen des Gewebes durch Klebebaender vermieden werden.

Die Erfindung wird im Anschluss unter Bezugnahme auf die Zeichnungen genauer beschrieben. In den Zeichnungen ist die erfindungsgemaesse Einrichtung schematisch dargestellt.

Es zeigen:
Fig. 1 einen vertikalen Laengsschnitt einer Wickelmaschine mit einer Einrichtung zur Bildung der erfindungsgemaessen Umhuellung;
Fig. 2 eine Vorderansicht des oberen Teils der Maschine gemaess Fig. 1 in Ansicht nach Pfeil F, mit einer Vorrichtung zum Verschliessen der abstehenden Enden der Umhuellung und einem Stoffballen mit der erfindungsgemaessen Schutzhuelle;
Fig. 3 bis 6 in vergroessertem Maßstab Details in Seitenansicht der Einrichtung zur Erzeugung der Schutzumhuellung in verschiedenen Verfahrensschritten zur Bildung der Umhuellung;
Fig. 7 in vergroessertem Maßstab eine unterbrochene Draufsicht auf die schwenkbare Foerdereinrichtung der Folie;
Fig. 8 in vergroessertem Maßstab ein Detail A gemaess Fig. 7 im Laengsschnitt; und
Fig. 9 bis 12 in vergroessertem Maßstab Details in Seitenansicht eines Endstueckes des Stoffballens in verschiedenen Abschnitten des Verschlussvorganges der abstehenden Enden der Schutzumhuellung.

Zur deutlicheren, zeichnerischen Darstellung ist das Gewebe sowie die Verpackungsfolie mit Strichpunktlinien bzw. mit Punktlinien dargestellt. Ferner ist der Abstand zwischen Gewebe und Umhuellungsfolie uebertrieben gegenueber den verbleibenden Bauteilen dargestellt.

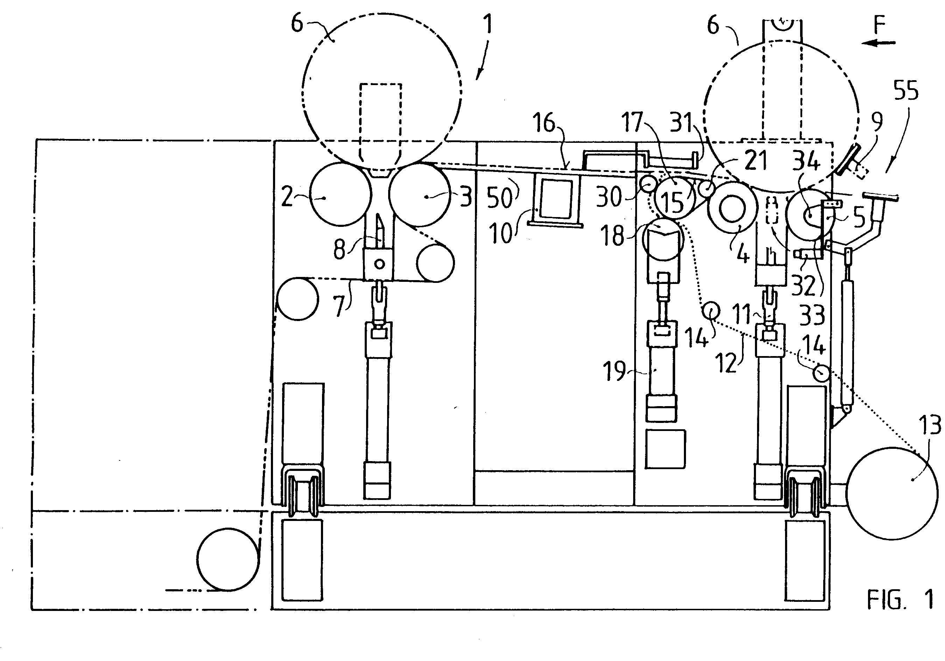

Die mit 1 gekennzeichnete Aufwickelvorrichtung ist schematisch in Fig. 1 dargestellt und kann Bestandteil einer Pruefeinrichtung fuer Gewebe sein. Die Wickelvorrichtung weist zwei Rollen 2 und 3 auf, die fuer die Bildung des Stoffballens 6 vorgesehen sind. Ferner sind zwei Zylinder 4 und 5 vorgesehen, die als Aufnahmewalzen oder Entladewalzen fuer den fertiggestellten Ballen dienen.

Der Ballen 6 wird in ueblicher Weise durch einen Wickelvorgang und Verwendung eines Wickelkernes, auf das das Gewebe 7 aufgewickelt wird, erstellt. Nicht dargestellte und bekannte Vorrichtungen stellen die Fertigstellung des Ballens nach Aufwickeln einer vorbestimmten Gewebelaenge fest. In bekannten Wickelvorrichtungen wird der fertiggestellte Ballen 6 von den Zylindern 2, 3 unter Verwendung eines Entladegeraetes 8 entnommen und rollt anschliessend auf einer geneigten Ebene 50, in vorteilhafter Weise einem Blech, in Richtung von zwei Aufnahmewalzen 4, 5. Ein schwenkbarer Anschlag 9 haelt den Ballen 6 zwischen den Walzen 4 und 5 an. Die Schneidvorrichtung 10 trennt den entladenen Stoffballen 6 vom endlosen Gewebeband 7. In den bekannten Maschinen, die kontinuierlich arbeiten, wird das aeussere Ende 16 des Ballens 6 aufgewickelt und am Ballenkoerper befestigt, z.B. unter Zuhilfenahme von Klebebaendern. Mit der Entladevorrichtung 11 wird der Ballen anschliessend an Vorrichtungen weitergegeben, die im Anschluss vorgesehen sind und zur Bildung der Schutzhuelle 16 sowie zum Verschliessen der abstehenden Enden 61 der Schutzhuelle dienen. Aus Gruenden der Einfachheit wurde auf die Beschreibung jener Bauteile der Maschine verzichtet, die fuer die Erfindung nicht wesentlich sind.

Hier setzt nun die Erfindung ein, die vorsieht, dass die Bildung der Umhuellung 16 und in vorteilhafter Weise auch der Verschluss der Endstuecke 61 der Umhuellung auf den Entladewalzen 4 und 5 erfolgt. Dies bedeutet, dass der Verpackungsvorgang ohne Verschiebevorgang des Stoffballens nach Abtrennen des endlosen Gewebebandes 7 erfolgt.

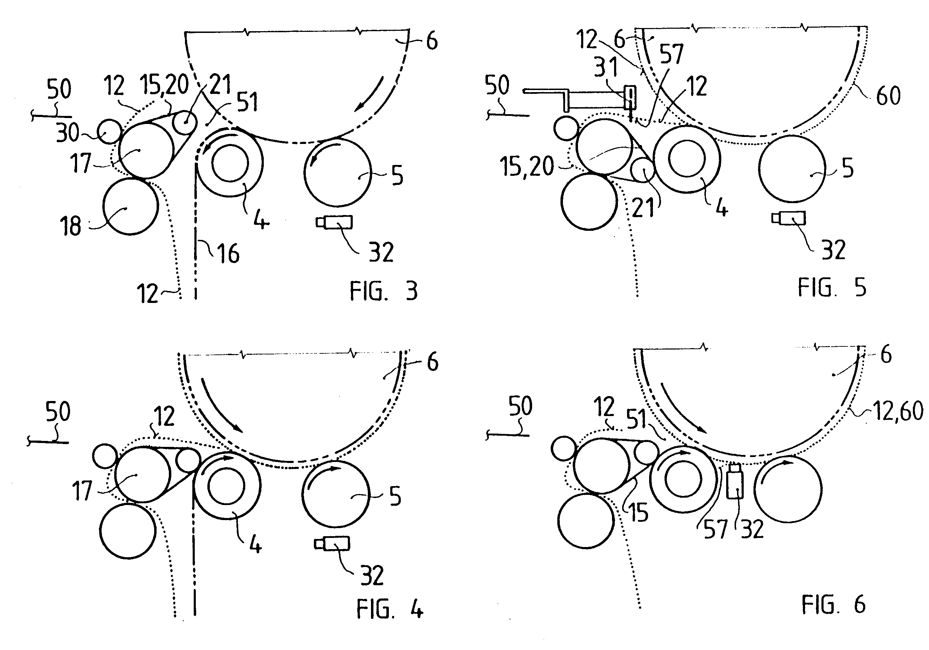

In einer bevorzugten Ausfuehrungsform ist die Folie 12 von einem thermoplastischen Kunststoff oder einem unter Waermeeinfluss schrumpfbaren Kunststoffilm gebildet, z.B. Polyaethylen. Die Folie 12 wird von einer Vorratsrolle 13 ueber Umlenkrollen 14 zu einer schwenkbar angeordneten Transportvorrichtung 15 gefuehrt, die zum Zufuehren der Folie in Richtung des Ballens 6 dient. Fuer den Verpackungsvorgang ist das aeussere Gewebeende 16 vom Ballen abgewickelt (Fig. 3), wie dies im Anschluss noch genauer beschrieben werden wird. Die Transporteinrichtung 15 ist zwischen der geneigten Ebene 50 und der darauffolgenden Walze 4 angeordnet. Mit den Bezugszeichen 17 und 18 sind jeweils eine hohle Walze, die zum Umlenken der Folie dient und eine Vorschubwalze gekennzeichnet, die mit einem doppeltwirkenden Zylinder 19 wirkverbunden ist.

Wenigstens ist eine der Aufnahmewalzen 4, 5, in vorteilhafter Weise aber beide Walzen in zwei Drehrichtungen antreibbar.

Zum Abwickeln des Endstueckes 16 des Gewebes ist die Transporteinrichtung 15 beweglich angeordnet, z.B. schwenkbar gegenueber der danebenliegenden Aufnahmewalze 4.

Die Ebene 15 wird im dargestellten Beispiel von einer Vielzahl von ringfoermigen Riemen 20 gebildet, wie dies in Fig. 3 - 8 dargestellt ist. Die Riemen 20 sind parallel zueinander angeordnet und erstrecken sich in Axialrichtung des Ballens 6. Die Riemen 20 sind zwischen dem Umlenkzylinder 17 und den Riemenscheiben 21, die an den vom Umlenkzylinder 17 abstehenden Armen montiert sind, umgelenkt. Die Walze 17 besteht aus hohlen Teilstuecken 23, die frei drehbar unter Verwendung von Lagern 28 und im gegenseitigen Abstand auf der inneren Welle 24 angeordnet sind. Die Welle 24 ist frei verschwenkbar in Halterungen 25 gelagert, die am Gestell 26 der Wickelmaschine 1 oder der Verpackungsvorrichtung 55 befestigt sind. Die Welle 24 ist mit ihrem Arm 27 mit einer steuerbaren Schwenkvorrichtung, die nicht dargestellt ist, verbunden, z.B. einem mehrhubigen Pneumatikzylinder. Die Arme 22 der Riemenscheibe 21 sind auf der Welle 24 befestigt.

Um die Folie 12 in Richtung des Ballens 6 und hier in den Zwickel 51, der zwischen dem abgewickelten Stoffende 16 und dem Ballen 6 gebildet ist (Fig. 3), zu fuehren, weist die Aufnahmewalze 4 ringfoermig angeordnete Nuten 29 auf, in die die Riemenscheiben 21 einschwenken koennen.

Vor dem hohlen Zylinder 17 ist die Walze 30 frei beweglich in geneigten Fuehrungen (nicht dargestellt) angeordnet, die sich von oben in Richtung des Zylinders 17 erstrecken, wobei die Walze mit dem Eigengewicht auf der Folie 12 gegen den Zylinder 17 aufliegt. Die Aufnahmewalzen 4 und 5 werden von gegenlaeufig antreibbaren nicht dargestellten Motoren in Bewegung gesetzt. Zum Aufschneiden der Verpackungsfolie und dem Laengsverschweissen der Umhuellung findet eine Schneidvorrichtung 31, sowie eine Schweissleiste 32 Verwendung. Diese Geraete sind an sich bekannt.

Die Schneidvorrichtung 31 ist hin und her beweglich auf einer nicht genauer dargestellten Querfuehrung angeordnet, und der Schweissbalken 32 ist schwenkbar auf einem Arm 33 angeordnet, der im Punkt 34 angelenkt ist und mit einem entsprechenden, nicht dargestellten Pneumatikzylinder in Wirkverbindung steht. Die Folienrolle 13 kann auch von mehreren Vorratsrollen gebildet werden, die bandartige thermoplastische Folien, die untereinandern auf Abstand angeordnet sind, aufnehmen.

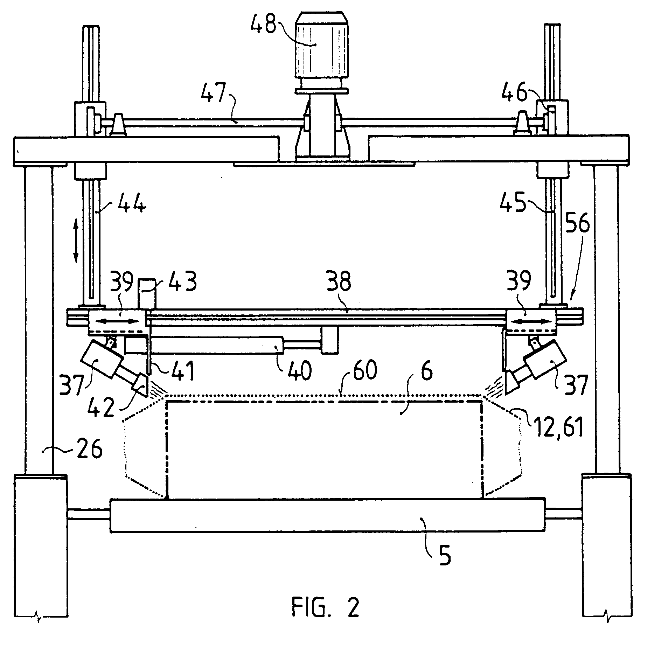

Die Vorrichtung 56 zum Verschliessen der abstehenden Enden 61 der Umhuellung weist ueber den Aufnahmewalzen 4, 5 (Fig. 2) Heissluftgeblaese 37 auf. Im dargestellten Beispiel sind zwei Heissluftgeblaese 37 vorgesehen, deren Warmluftstroeme von aussen auf den Stoffballen geneigt ausgerichtet sind.

Die Heissluftgeraete 37 sind auf verschiebbaren Schlitten 39 angeordnet, die an einer Traverse 38 montiert sind, die in einer diametral zum Ballen 6 angeordneten Ebene nach oben bzw. nach unten verfahrbar sind.

Wie in Fig. 2 fuer nur einen Schlitten 39 dargestellt, ist zwischen jedem Schlitten 39 und der Traverse 38 ein doppeltwirkender Pneumatikzylinder 40 angeordnet. Auf der Seite des Schlittens 39, die auf den Gewebeballen 6 gerichtet ist, ist in Vertikalrichtung verschiebbar eine Platte 41 vorgesehen, die hin und her bewegbar ist. Bei zurueckgefahrener Stellung (Fig. 2) befinden sich die Platten 41 ueber der Ausblaseoeffnung 42 des Warmluftgeraetes. Jede Platte 41 ist mit einem doppeltwirkenden Pneumatikzylinder 43 wirkverbunden, der seinerseits auf dem Schlitten 39 angeordnet ist. Die Form der Platte kann frei gewaehlt werden. Es wurden gute Ergebnisse mit einer rechteckigen Platte erzielt, deren Unterseite abgerundet wurde. Im dargestellten Beispiel weist die Traverse 38 zwei Streben 44 auf, die mit einer Zahnstange 45 ausgeruestet sind. Mit den Zahnstangen 45 stehen Zahnraeder 46 in Wirkverbindung, die auf den Wellen 41 befestigt sind, die mit einem Reduziergetriebe 48 wirkverbunden sind. Das Reduziergetriebe 48 wird ueber bekannte und nicht dargestellte Vorichtungen angetrieben und gesteuert. So ist z.B. ein Ablesen des Durchmessers des Ballens 6 moeglich.

Im Anschluss wird nun das Verfahren zur Erstellung der Umhuellung 60, sowie zum Verschliessen der abstehenden Huellenenden 61, sowie die Arbeitsweise der erfindungsgemaessen Vorrichtung beschrieben.

Zum Entlanden des fertiggewickelten Ballens (Fig. 1) wird die schwenkbare Foerdereinrichtung 15 fluchtend mit der geneigten Abrollebene 50 angeordnet. Nach Entlanden des Ballens 6 und dem Abschneiden des Gewebes unter Zuhilfenahme der Schneidvorrichtung 10, werden die Aufnahmewalzen 4, 5 im Uhrzeigersinn betaetigt, und das Endstueck des Gewebes 16, das auf der Ebene 50 verbleibt, wird solange auf den Ballen 6 aufgewickelt bis der querliegende Rand des Gewebeendes 16 zwischen den Riemenscheiben 21 und dem Ballen 6 zu liegen kommt. Um im Anschluss daran das Gewebeende 16 zu oeffnen, und damit einen Zwickel 51 in Uebereinstimmung mit der Aufnahmewalze 4 auf der Seite der Wickelmaschine 1 zu schaffen, wird die Welle 24 mit den Riemenscheiben 21 (Fig. 3) nach oben verschwenkt, ferner erfolgt ein Drehantrieb der Walzen 4 und 5, um ein Abwickeln des Gewebes vom Ballen 6 zu erreichen. Das Gewebeende 16 bewegt sich somit nach unten in Richtung der Walze 4. Die Laenge des abzuwickelnden Gewebeendes ist mit bekannten Steuereinrichtungen einstellbar.

Die Welle 24 wird nun nach unten verschwenkt, um die eine immaginaere Verlaengerung der Transportvorrichtung 15 ungefaehr in die Mitte des Zwickels 51 zu verlagern (Fig.4).

Die Vorschubwalze 18 wird gegen die Umlenkwalze 17 gedrueckt, dadurch erfolgt eine Vorschubbewegung der Verpackungsfolie 12 ueber die Transportvorrichtung 15 und ein Einfuegen der Folie in den Zwickel 51 bis zum Anstossen an den Ballen 6 (Fig. 4). Durch Beibehalten der Vorschubbewegung der Folie 12 werden die Walzen 4 und 5 in Drehbewegung versetzt, wodurch der Ballen 6 in Aufwickelrichtung verdreht wird. Die Drehbewegung des Ballens 6 fuehrt zu einem Einfuegen des Folienendes 12 zwischen das aeussere Endstueck 16 sowie den Ballenkoerper.

In der Praxis wurde festgestellt, dass schon das Gewicht des Ballens ausreichend sein wird, um ein Einfuegen der Folie ohne Faltenbildung in den Zwickel des Ballens zu ermoeglichen. Nach Zurueckschwenken des Gewebestueckes 16 in Richtung des Ballenkoerpers und der Fertigstellung der Schutzhuelle 60 mit der gewuenschten Anzahl von Wicklungen, die mit der Folie 12 gebildet werden, erfolgt ein Anhalten der Walzen 4 und 5, ferner wird die Welle 24 nach unten verschwenkt (Fig. 5). Es wird somit ein Loesen zwischen der aus Riemen 20 bestehenden Transporteinrichtung 15 und der Folie 12 erzielt. Es kann somit der Schneidvorgang der Folie (Fig. 5) durchgefuehrt werden. Im Anschluss daran folgt eine Drehung der Walzen 4, 5, um den Ballen in Aufwickelrichtung zu verdrehen, und um das abgeschnittene Ende 57 der Schutzfolie in unmittelbare Naehe der Folienbefestigungsvorrichtung zu bringen.

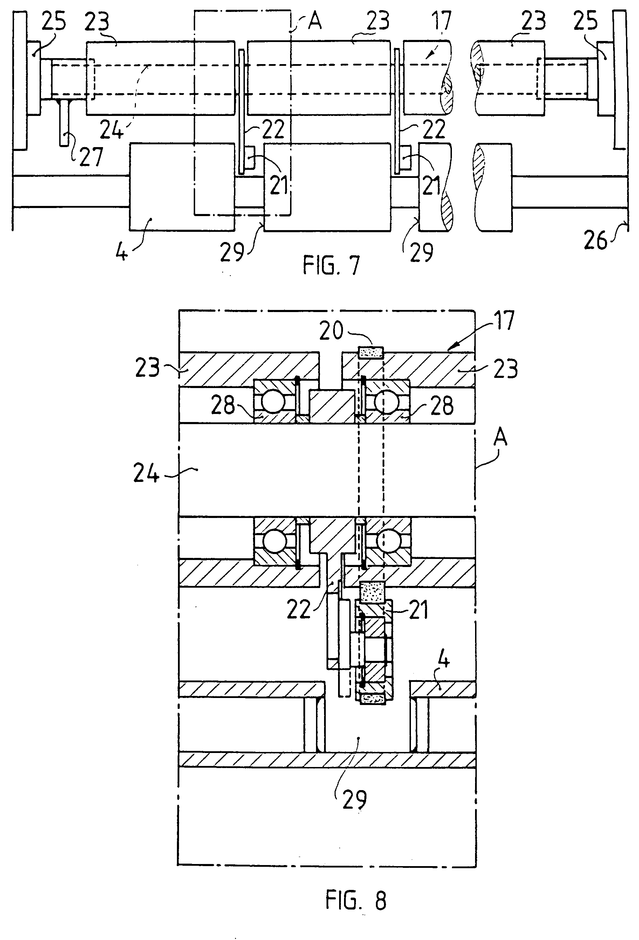

Bei Verwendung einer thermoplastischen Folie wird eine Schweissleiste 32 in Richtung des Ballens verschwenkt (Fig. 6). Da der Abstand zwischen Schneidvorrichtung 31 und der Mittellinie zwischen den Walzen 4 und 5 konstant bleibt, erfolgt die Drehbewegung zum Aufwickeln des Ballens nach Abschneiden der Schutzfolie unter Verwendung bereits bekannter Einrichtungen fuer Wickelmaschinen. Auch der Schweissvorgang erfolgt in ueblicher Weise unter Verwendung bekannter Vorrichtungen. Die Welle 24 wird im Anschluss nach rueckwaerts verschwenkt, um die Transporteinrichtung 15 mit der Entladeebene 50 (Fig. 1 und 6) zur Fluchtung zu bringen.

Der Herstellvorgang der Umhuellung 16 wird in vorteilhafter Weise durch sofortiges Verschliessen der abstehenden Huellenenden 61 durchgefuehrt, ohne dass dafuer der Ballen verschoben wird. Dieser Vorgang erfolgt in vorteilhafter Weise mit dem erfindungsgemaessen Verfahren und der darzugehoerigen Vorrichtung.

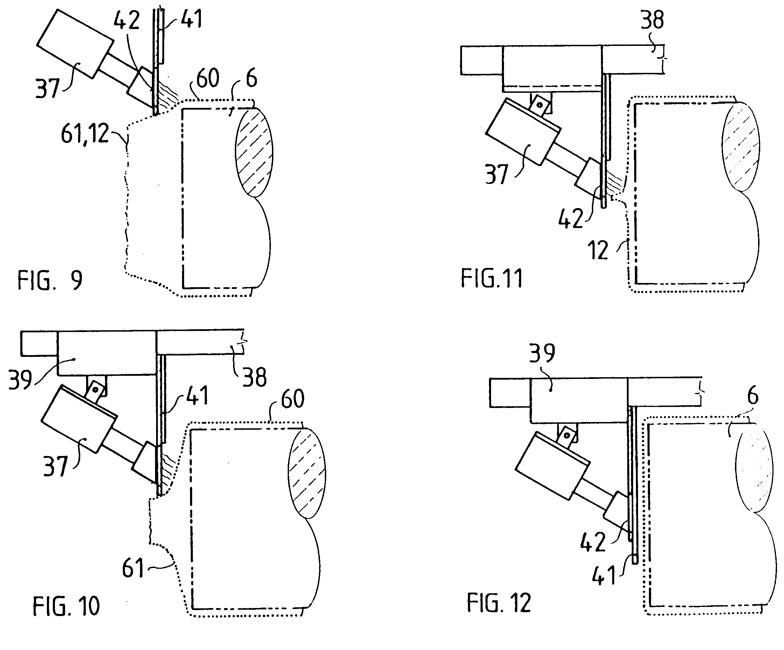

Durch eine bekannte Messvorrichtung wird der Durchmesser des Ballens 6 festgestellt und durch eine bekannte Steuervorrichtung wird ein Absenken der Querstrebe 38 bewerkstelligt, bis die Oeffnungen 42 fuer den Austritt der Heissluftstroeme aus den Warmlufterzeugern in Uebereinstimmung mit den Enden des Ballens angeordnet sind (Fig. 2 und 9). Durch pneumatische Zylinder 40 wird der Abstand zwischen den Ausstroemoeffnungen 42 fuer die Heissluft und den Kopfenden des Ballens festgelegt. Der Ballen wird in Drehbewegung versetzt, anschliessend erfolgt ein allmaehliches Absenken der Querstrebe 38 (Fig. 10 und 11). Durch die Heissluftstroeme wird ein Schrumpfvorgang der abstehenden Enden 61 der Folie bewerkstelligt und gleichzeitig erfolgt ein Anblasen der Folie in Richtung der Ballenenden, sowie in Richtung der Laengsachse des Ballens.

Die Temperatur der Heissluftstroeme ist derartig eingestellt, dass ein wirkungsvoller Schrumpfeffekt der Schutzfolie eintritt. Die Temperaturen zur Durchfuehrung des Schrumpfvorganges, die an sich bekannt sind, werden von Fall zu Fall entsprechend dem eingesetzten thermoplastischen Folienmaterial ausgewaehlt. Sobald die Heissluftstroeme die Laengsache des Ballens erreicht haben, erfolgt ein Verschliessen der verbleibenden rohrfoermigen Umhuellung, indem die abstehenden Enden der Umhuellung verschlossen werden (Fig. 11) und durch den Schrumpfvorgang ein dichtes Anliegen der Folie gegen den Ballen erfolgt. Um ein sicheres und flaches Anliegen der Folien gegen die Kopfstuecke des Ballens zu gewaehrleisten, fuehren die Pneumatikzylinder 43 eine Absenkbewegung der Platten 41 durch, und ueber die Pneumatikzylinder 40 wird dem Schlitten 39 eine Annaeherungsbewegung verliehen, und somit erfolgt ueber die Platten 41 ein Andruecken der Folie gegen das entsprechende Kopfstueck (Fig. 12). Es wird somit der Verpackungsvorgang des Ballens, der auf den Aufnahmewalzen 4 und 5 ruht, beendet. Die Aufnahmewalzen 4, 5 koennen in vorteilhafter Weise durch die Entladewalzen der Wickelmaschine gebildet werden, oder diese Walzen koennen in einer Vorrichtung 46 einer Verpackungseinrichtung, die der Wickelmaschine zugeordnet ist, vorgesehen sein. Nur als Beispiel sind in Fig. 1 die Walzen 2 und 3 zum Aufwickeln des Ballens sowie die Aufnahme- oder Entladewalzen 4, 5 auf einer ueber Raeder beweglich gelagerten Vorrichtung vorgesehen, die quer zur Wickelvorrichtung 1 verfahrbar ist.

## Patentansprüche

1. Verfahren zum Verpacken von Gewebeballen (6) in eine Schutzfolie (12), bei dem nach Erstellen des Gewebeballens (6) dieser an zwei Aufnahmewalzen (4, 5) übergeben wird und ein Abtrennen des Gewebebandes erfolgt, wobei in den zwischen dem Ballen (6) und dem äußeren Ende (16) des abgetrennten Gewebestückes gebildeten Zwickel (51) eine Schutzfolie (12) eingefügt wird, im Anschluß daran eine Zufuhr der Schutzfolie (12) in Richtung des Gewebeballens (6), der in Aufwickelrichtung angetrieben ist, erfolgt und nach Erstellung des Schutzhülle (60) die Drehbewegung des Ballens (6) unterbrochen wird und ein Abtrennen der Schutzfolie (12) erfolgt und im Anschluß daran das äußere Ende der Schutzfolie (12) an der Schutzhülle (60) befestigt wird, **dadurch gekennzeichnet****,** daß die Zufuhr der Schutzfolie (12) in den Zwickel (51) hinein von unterhalb der Aufnahmewalzen (4, 5) und über eine Transporteinrichtung (15, 20), die gegenüber der gegenüberliegenden Aufnahmewalze (4) schwenkbar gelagert ist, erfolgt.

2. Verfahren nach Patentanspruch 1, bei dem nach Bildung der Schutzhülle (60) unter Verwendung einer unter Wärmeeinfluß schrumpfbaren Folie (12) und Versetzung in Drehbewegung des Ballens (6) die abstehenden Enden der Schützhülle (60) durch steuerbare Heißluftströme beeinflußt werden, um ein Schrumpfen der Hüllenenden (61) in Richtung der Kopfstücke des Ballens (6) zu verursachen, **dadurch gekennzeichnet**, daß die Heißluftströme in Radialrichtung von der Außenseite des Ballens (6) zur Längsachse des Ballens (6) bewegt werden und daß nach Schrumpfen der Endstücke (61) der Schutzhülle (60) die geschrumpften und warmen Hüllenenden (61) gegen die Kopfstücke des Ballens (6) gepreßt werden.

3. Vorrichtung zur Durchführung des Verfahrens nach Patentanspruch 1 mit im Anschluß an die Vorrichtung (2, 3) zur Bildung des Gewebeballens (6) vorgesehenen Aufnahmewalzen (4, 5) zur Aufnahme des zu verpackenden Ballens (6), wobei die Walzen (4, 5) in zwei Drehrichtungen antreibbar sind, einer Einrichtung zum Zuführen der Schutzfolie (12), einer Schneidvorrichtung (31), die quer zur Schutzfolie (12) antreibbar ist und die Schutzfolie während des Schneidhubes durchdringt, einer Vorrichtung (32) zur Befestigung der Hüllfolie, wobei diese Vorrichtung (32) aus einer Ruhelage, in der sie sich auf Abstand vom Ballen (6) befindet, in eine Arbeitslage, in der sie mit der Schutzhülle (60) in Berührung tritt, bewegbar ist, **dadurch gekennzeichnet**, daß die Einrichtung (18, 17) zum Zuführen der Schutzfolie (12) unterhalb der Aufnahmewalzen (4, 5) angeordnet ist, daß zwischen dem Ende einer Verschiebeebene (50) für den Ballen (6) von der Wickeleinrichtung (1) und den Aufnahmewalzen (4, 5) des Ballens (6) eine schwenkbare Transporteinrichtung (15) zum Einführen der Verpackungsfolie (12) in den Zwickel (51) hinein vorgesehen ist, daß die schwenkbare Transporteinrichtung (15) die benachbarte Aufnahmewalze (4) schneidend durchdringt, daß die Schneidevorrichtung (31) über der schwenkbaren Transporteinrichtung (15) angeordnet ist, daß die Vorrichtung (32) zur Befestigung der Hüllfolie unterhalb der Aufnahmewalzen (4, 5) angebracht ist und daß die Folienvorratsrolle (13) unterhalb der Aufnahmewalzen (4, 5) gelagert ist.

4. Vorrichtung nach Anspruch 3, **dadurch gekennzeichnet**, daß die Walzen (4, 5) zur Aufnahme des Ballens (6) die Walzen (4, 5) zum Entladen der Wickelvorrichtung (1) bilden.

5. Vorrichtung nach Patentanspruch 3, **dadurch gekennzeichnet**, daß die schwenkbare Transporteinrichtung (15) aus einer Vielzahl von ringförmigen Riemen (20) besteht, daß die ringförmigen Riemen (20) parallel zueinander und im Abstand in Axialrichtung des Ballens (6) angeordnet sind, daß die Riemen (20) zwischen einer hohl ausgebildeten Umlenkwalze (17) für die Folie (12) und Riemenscheiben (21) umgelenkt sind und die Riemenscheiben von von der Umlenkwalze abstehenden Armen (22) getragen werden, daß die Arme (22) drehfest an einer schwenkbaren Aufnahmewelle (24) angeordnet sind, die im Gestell (26) der Vorrichtung (25) im Inneren des hohlen Umlenkzylinders (17) angeordnet sind, daß der hohl ausgebildete Umlenkzylinder (17) aus Rohrstücken (23) besteht, die frei auf der Welle (24), die schwenkbar angeordnet ist, gelagert sind, daß der Aufnahmezylinder (4) für den Ballen (6) ringförmige Nuten (29) in der Schnittzone mit den Riemen (20) aufweist und daß die Vorrichtung (17, 18) zum Zuführen der Folie (12) von einem hohlen Umlenkzylinder (17) und einem antreibbaren Zylinder (18), der gesteuert mit hin- und hergehender Bewegung in Richtung des Umlenkzylinders (17) gegen die dazwischengefügte Folie bewegbar ist, gebildet ist.

6. Vorrichtung nach Patentanspruch 3, **dadurch gekennzeichnet**, daß der hohl ausgebildete Umlenkzylinder (17) für die Folie (12) eine Führungsrolle (30) für die Folie (12) aufweist und die Führungsrolle (30) frei drehbar in geneigten Führungen angeordnet ist und die Führungen von oben in Richtung des Umlenkzylinders (17) geneigt sind und mit dem Gestell (26) der Vorrichtung (25) verbunden sind.

7. Vorrichtung zum Schließen der abstehenden Enden der Schutzhülle nach Patentanspruch 2 mit zwei Geräten (37) zur Erzeugung von Heißluftströmen, die sich gegenüberliegen und von außen in Richtung der Kopfstücke des Ballens (6) ausgerichtet sind, **dadurch gekennzeichnet**, daß die Heißlufterzeugungsgeräte (37) von beweglich angeordneten Schlitten (39) aufgenommen werden und die Schlitten mit hin- und hergehender Bewegung auf einer Querstrebe (38), parallel zur Walze (45) für die Aufnahme des Ballens (6) angeordnet sind, daß die Querstrebe (38) mit dem Gestell (26) der Vorrichtung (56) verbunden ist und in einer quer zum Ballen (6) angeordneten Ebene unter Verwendung von steuerbaren Geräten (45) anhebbar bzw. absenkbar ist, daß auf jedem Schlitten (39) eine Platte (41) angeordnet ist, die zwischen einem Heißlufterzeuger (37) und dem Ballen (6) angeordnet ist, und die Platten (41) in Vertikalrichtung zwischen einer Ruhelage, in der die Platten (41) über der Austrittsöffnung der Heißluftströme (42) angeordnet sind und einer Arbeitslage, in der die Platten (41) vor den Kopfstücken des Ballens (6) zu liegen kommen, hin- und herbeweglich sind.

8. Vorrichtung nach Patentanspruch 7, **dadurch gekennzeichnet**, daß eine mit hin- und hergehender Bewegung steuerbare Vorrichtung (40) mit einem Ende an einem Schlitten (39) angeordnet ist und einen Heißlufterzeuger (37) aufnimmt und mit dem anderen Ende an der Strebe (38) festgelegt ist.

9. Vorrichtung nach Patentanspruch 7, **dadurch gekennzeichnet**, daß jeder Schlitten (39) eine Vorrichtung (43) zum auf- und abgehenden, gesteuerten Antrieb aufweist und mit der Platte (41) verbunden ist.

10. Vorrichtung nach Patentanspruch 3 und 6, **dadurch gekennzeichnet**, daß die Vorrichtung (55) zur Bildung der Schutzhülle (16) des Ballens (6) und die Vorrichtung (56) zum Verschließen der Endseiten (61) der Hülle (60) gemeinsam das Walzenpaar (4, 5) zur Aufnahme des Ballens (6) aufnehmen.

11. Vorrichtung nach Patentanspruch 10, **dadurch gekennzeichnet**, daß die Einrichtung in eine Wickeleinrichtung (1) eingegliedert ist.

## Claims

1. Method of packaging bales of fabric (6) into a protective film (12), in which, following the production of the bale of fabric (6), the latter is transferred to two take-up rolls (4, 5) and severing of the strip of fabric is carried out, a protective film (12) being introduced into the nip (51) formed between the bale (6) and the outer end (16) of the severed piece of fabric, the protective film (12) then being fed in the direction of the bale of fabric (6), which is driven in the winding direction, and after the production of the protective sheath (60) the rotational movement of the bale (6) being interrupted and severing of the protective film (12) being carried out, the outer end of the protective film (12) then being fastened to the protective sheath (60), characterized in that the feed of the protective film (12) into the nip (51) is carried out from underneath the take-up rolls (4, 5) and over a transport apparatus (15, 20) which is mounted such that it can pivot in relation to the take-up roll (4) located opposite.

2. Method according to Patent Claim 1, in which, after forming the protective sheath (60) using a heat-shrinkable film (12) and setting the bale (6) into rotational movement, the protruding ends of the protective sheath (60) are acted on by controllable hot-air streams so as to cause shrinkage of the ends (61) of the sheath in the direction of the main portions of the bale (6), characterized in that the hot-air streams are moved in the radial direction from the outside of the bale (6) towards the longitudinal axis of the bale (6), and in that, after the shrinking of the end pieces (61) of the protective sheath (60), the shrunk and warm ends (61) of the sheath are pressed against the main portions of the bale (6).

3. Device for carrying out the method according to Patent Claim 1, having take-up rolls (4, 5) for taking up the bale (6) to be packaged and provided adjacent to the device (2, 3) for forming the bale of fabric (6), the rolls (4, 5) being drivable in two directions of rotation, having an apparatus for feeding the protective film (12), having a cutting device (31) which can be driven transverse to the protective film (12) and penetrates the protective film during the cutting stroke, having a device (32) for fastening the sheathing film, this device (32) being able to be moved from a resting position in which it is located at a distance from the bale (6) into a working position in which it comes into contact with the protective sheath (60), characterized in that the apparatus (18, 17) for feeding the protective film (12) is arranged underneath the take-up rolls (4, 5), in that a pivotable transport apparatus (15) for the insertion of the packaging film (12) into the nip (51) is provided between the end of a displacement plane (50) for the bale (6) from the winding device (1) and the take-up rolls (4, 5) of the bale (6), in that the pivotable transport apparatus (15) passes through the adjacent take-up roll (4) in an intersecting manner, in that the cutting device (31) is arranged above the pivotable transport apparatus (15), in that the device (32) for fastening the sheathing film is fitted underneath the take-up rolls (4, 5), and in that the film supply roll (13) is mounted underneath the take-up rolls (4, 5).

4. Device according to Claim 3, characterized in that the rolls (4, 5) for taking up the bale (6) form the rolls (4, 5) for unloading the winding device (1).

5. Device according to Patent Claim 3, characterized in that the pivotable transport apparatus (15) comprises a multiplicity of ring-shaped belts (20), in that the ring-shaped belts (20) are arranged parallel to one another and spaced apart in the axial direction of the bale (6), in that the belts (20) are deflected between a hollow-design deflection roll (17) for the film (12) and belt pulleys (21) and the belt pulleys are carried by arms (22) projecting from the deflection roll, in that the arms (22) are arranged in a rotationally fixed manner on a pivotable take-up shaft (24) which is arranged in the frame (26) of the device (25), in the interior of the hollow deflection cylinder (17), in that the hollow-design deflection cylinder (17) consists of tubular pieces (23) which are mounted freely on the shaft (24), which is pivotably arranged, in that the take-up cylinder (4) for the bale (6) has annular grooves (29) in the zone of intersection with the belts (20), and in that the device (17, 18) for feeding the film (12) is formed by a hollow deflection cylinder (17) and a driveable cylinder (18) which can be moved against the interposed film in a controlled manner with a reciprocating movement in the direction of the deflection cylinder (17).

6. Device according to Patent Claim 3, characterized in that the hollow-design deflection cylinder (17) for the film (12) has a guide roller (30) for the film (12) and the guide roller (30) is arranged freely rotatably in inclined guides, and the guides are inclined from above in the direction of the deflection cylinder (17) and are connected to the frame (26) of the device (25).

7. Device for closing the projecting ends of the projective sheath according to Patent Claim 2, having two devices (37) for producing hot-air streams which are located opposite each other and are directed from the outside in the direction of the main portions of the bale (6), characterized in that the hot-air generating devices (37) are accommodated by moveably arranged carriages (39), and the carriages are arranged with a reciprocating movement on a transverse strut (38) parallel to the roll (45) for the take-up of the bales (6), in that the transverse strut (38) is connected to the frame (26) of the device (56) and can be raised or lowered in a plane arranged transverse to the bale (6), using controllable devices (45), in that there is arranged on each carriage (39) a plate (41) which is arranged between a hot-air generator (37) and the bale (6), and the plates (41) can be moved to and fro in the vertical direction between a rest position in which the plates (41) are arranged above the exit opening of the hot-air streams (42) and a working position in which the plates (41) come to lie in front of the main portions of the bale (6).

8. Device according to Patent Claim 7, characterized in that a device (40) which can be controlled with a reciprocating movement is arranged with one end on one carriage (39) and accommodates a hot-air generator (37), and is fixed to the strut (38) by the other end.

9. Device according to Patent Claim 7, characterized in that each carriage (39) has a device (43) for driving it up and down in a controlled manner, and is connected to the plate (41).

10. Device according to Patent Claim 3 and 6, characterized in that the device (55) for forming the protective sheath (16) of the bale (6) and the device (56) for closing the end sides (61) of the sheath (60) together accommodate the pair of rolls (4, 5) for taking up the bale (6).

11. Device according to Patent Claim 10, characterized in that the apparatus is incorporated into a winding apparatus (1).

## Revendications

1. Procédé pour emballer des balles de tissu (6) dans une feuille de protection (12) où après la réalisation de la balle de tissu (6), celle-ci est transmise à deux rouleaux de réception (4, 5) et une séparation de la bande de tissu a lieu, où l'on insère dans le gousset (51) formé entre la balle (6) et l'extrémité extérieure (16) de la pièce de tissu séparée une feuille de protection (12), ensuite a lieu une amenée de la feuille de protection (12) en direction de la balle de tissu (6) qui est entraînée dans la direction d'enroulement, et après l'établissement de la gaine de protection (60), le mouvement de rotation de la balle (6) est interrompu et une séparation de la feuille de protection (12) a lieu, et ensuite l'extrémité extérieure de la feuille de protection (12) est fixée à la gaine de protection (60), caractérisé en ce que l'amenée de la feuille de protection (12) dans le gousset (51) a lieu depuis en dessous des rouleaux de réception (4, 5) et par un dispositif de transport (15, 20) qui est logé de façon pivotante par rapport au rouleau de réception (4) opposé.

2. Procédé selon la revendication 1, où après la réalisation de l'enveloppe de protection (60) en utilisant une feuille (12) rétractable sous l'action de la chaleur et en entraînant en rotation la balle (6) on agit sur les extrémités saillantes de la gaine de protection (60) par des courants d'air chaud pouvant être commandés pour provoquer une rétraction des extrémités de gaine (61) en direction des pièces de tête de la balle (6), caractérisé en ce que les courants d'air chaud peuvent être déplacés suivant la direction radiale depuis le côté extérieur de la balle (6) à l'axe longitudinal de la balle (6) et en ce que, après la rétraction des pièces d'extrémité (61) de la gaine de protection (60), les extrémités de gaine chaudes et rétractées (61) sont pressées contre les pièces de tête de la balle (6).

3. Dispositif pour la mise en oeuvre du procédé selon la revendication 1, avec des rouleaux de réception (4, 5) prévus à la suite du dispositif (2, 3) pour former la balle de tissu (6), pour recevoir la balle à emballer (6), les rouleaux (4, 5) pouvant être entraînés dans deux directions de rotation, un dispositif pour l'amenée de la feuille de protection (12), un dispositif de coupe (31) qui peut être entraîné transversalement à la feuille de protection (12) et qui traverse la feuille de protection pendant une course de coupe, un dispositif (32) pour fixer la feuille d'enveloppe, ce dispositif (32) pouvant être amené d'une position de repos où il se trouve à une certaine distance de la balle (6) en une position de travail où il vient en contact avec l'enveloppe de protection (60), caractérisé en ce que le dispositif (18, 17) pour amener la feuille de protection (12) est disposé en dessous des rouleaux de réception (4, 5), en ce qu'il est prévu entre l'extrémité d'un plan de déplacement (50) de la balle (6) du dispositif d'enroulement (1) et les rouleaux de réception (4, 5) de la balle (6) un dispositif de transport pivotant (15) pour insérer la feuille d'emballage (12) dans le gousset (51), en ce que le dispositif de transport pivotant (15) traverse en coupant le rouleau de réception avoisinant (4), en ce que le dispositif de coupe (31) est disposé au-dessus du dispositif de transport pivotant (15), en ce que le dispositif (32) pour fixer la feuille d'enveloppe est disposé en dessous des rouleaux de réception (4, 5) et en ce que le rouleau d'alimentation de feuille (13) est logé en dessous des rouleaux de réception (4, 5).

4. Dispositif selon la revendication 3, caractérisé en ce que les rouleaux (4, 5) pour la réception de la balle (6) constituent les rouleaux (4, 5) pour décharger le dispositif d'enroulement (1).

5. Dispositif selon la revendication 3, caractérisé en ce que le dispositif de transport pivotant (15) est constitué d'une pluralité de courroies annulaires (20), que les courroies annulaires (20) sont disposées parallèlement les unes aux autres et à une certaine distance dans la direction axiale de la balle (6), en ce que les courroies (20) sont déviées entre un rouleau de renvoi creux (17) pour la feuille (12) et les poulies (21) et en ce que les poulies sont supportées par des bras (22) faisant saillie du rouleau de renvoi, que les bras (22) sont disposées, immobiles en rotation, à un arbre de réception pivotant (24), qui sont disposés dans le châssis (26) du dispositif (25) dans l'intérieur du cylindre de renvoi creux (17), en ce que le cylindre de renvoi creux (17) est constitué de pièces tubulaires (23) qui sont logées librement sur l'arbre (24) qui est disposé de façon pivotante, en ce que la cylindre de réception (4) pour la balle (6) présente des rainures annulaires (29) dans la zone de coupe avec les courroies (20) et en ce que le dispositif (17, 18) pour amener la feuille (12) est constitué par un cylindre de renvoi creux (17) et un cylindre pouvant être entraîné (18) qui est déplaçable d'une façon commandée suivant un mouvement alternatif en direction du cylindre de renvoi (17) contre la feuille intercalée.

6. Dispositif selon la revendication 3, caractérisé en ce que le cylindre de renvoi creux (17) pour la feuille (12) présente un rouleau de guidage (30) pour la feuille (12), et en ce que le rouleau de guidage (30) est disposé de manière librement tournante dans des guidages appropriés, et que les guidages sont inclinés depuis le haut en direction du cylindre de renvoi (17) et sont reliés au châssis (26) du dispositif (25).

7. Dispositif pour fermer les extrémités saillantes de l'enveloppe de protection selon la revendication 2, avec deux appareils (37) pour produire des flux d'air chaud qui sont opposés et qui sont orientés depuis l'extérieur en direction des pièces de tête de la balle (6), caractérisé en ce que les appareils générateurs d'air chaud (37) sont reçus par des chariots mobiles (39), et que les chariots sont disposés suivant un mouvement alternatif sur une barre transversale (38), parallèlement au rouleau (45) pour la réception de la balle (6), en ce que la barre transversale (38) est reliée au châssis (26) du dispositif (56) et peut être relevée et abaissée dans un plan disposé transversalement à la balle (6) en utilisant des appareils (45) pouvant être commandés, en ce qu'il est disposé sur chaque chariot (39) une plaque (41) qui est disposée entre un générateur d'air chaud (37) et la balle (6), et en ce que les plaques (41) peuvent effectuer un mouvement de va-et-vient dans la direction verticale entre une position de repos où les plaques (41) sont disposées au-dessus de l'ouverture de sortie des courants d'air chaud (42) et une position de travail où les plaques (41) se trouvent devant les pièces de tête de la balle (6).

8. Dispositif selon la revendication 7, caractérisé en ce qu'un dispositif (40) pouvant être commandé suivant un mouvement de va-et-vient est disposé avec une extrémité à un chariot (39) et reçoit un générateur d'air chaud (37) et est fixé à l'autre extrémité à la barre (38).

9. Dispositif selon la revendication 7, caractérisé en ce que chaque chariot (39) présente un dispositif (43) en vue d'un entraînement commandé ascendant et descendant et est relié à la plaque (41).

10. Dispositif selon la revendication 3 et 6, caractérisé en ce que le dispositif (55) pour former l'enveloppe de protection (16) de la balle (6) et le dispositif (56) pour fermer les côtés d'extrémité (61) de l'enveloppe (60) reçoivent ensemble la paire de rouleaux (4, 5) pour la réception de la balle (6).

11. Dispositif selon la revendication 10, caractérisé en ce que le dispositif est incorporé dans un dispositif d'enroulement (1).
